Europäisches Patentamt

European Patent Office

Office européen des brevets

(19)

(11) **EP 1 371 014 B1**

(12) **EUROPEAN PATENT SPECIFICATION**

(45) Date of publication and mention
of the grant of the patent:
**31.05.2006 Bulletin 2006/22**

(21) Application number: **02709867.2**

(22) Date of filing: **20.03.2002**

(51) Int Cl.:
**G06T 5/00** (2006.01)

(86) International application number:
**PCT/US2002/008642**

(87) International publication number:
**WO 2002/075654 (26.09.2002 Gazette 2002/39)**

(54) **SYSTEM AND METHOD FOR ASYMMETRICALLY DEMOSAICING RAW DATA IMAGES USING COLOR DISCONTINUITY EQUALIZATION**

SYSTEM UND VERFAHREN ZUR ASYMMETRISCHEN ENTFERNUNG DES MOSAIKEFFEKTES IN ROHBILDDATEN UNTER VERWENDUNG EINES FARBUNTERSCHIEDAUSGLEICHS

SYSTEME ET PROCEDE DE DEMOSAIQUAGE ASYMETRIQUE D'IMAGES A DONNEES BRUTES PAR EGALISATION DE DISCONTINUITES DE COULEURS

(84) Designated Contracting States:
**DE FR GB**

(30) Priority: **20.03.2001 US 813750**

(43) Date of publication of application:
**17.12.2003 Bulletin 2003/51**

(73) Proprietor: **Hewlett-Packard Company
Palo Alto,
California 94304-1112 (US)**

(72) Inventor: **NGUYEN, Truong-Thao
Fort Lee, NJ 07024 (US)**

(74) Representative: **Jehan, Robert et al
Williams Powell
Morley House
26-30 Holborn Viaduct
London EC1A 2BP (GB)**

(56) References cited:
EP-A- 0 632 663          EP-A- 1 175 101
WO-A-01/26359          US-A- 4 642 678

• KIMMEL R: "Demosaicing: image reconstruction from color CCD samples" IEEE TRANSACTIONS ON IMAGE PROCESSING, IEEE INC. NEW YORK, US, vol. 8, no. 9, September 1999 (1999-09), pages 1221-1228, XP002237072 ISSN: 1057-7149
• MURESAN, D.D. ET AL.: "Reconstruction of Color Images from CCD Arrays" PROCEEDINGS TI DSP FEST, HOUSTON, TX, HTTP://WWW.TI.COM/SC/ DOCS/GENERAL/DSP/FEST PROCEEDINGS/ FEST2000/CORNELL001.PDF, 2 - 4 August 2000, XP002243635

EP 1 371 014 B1

**Description**

FIELD OF THE INVENTION

The invention relates generally to the field of image processing, and more particularly to a system and method for demosaicing raw data (mosaiced) images.

BACKGROUND OF THE INVENTION

Color digital cameras are becoming ubiquitous in the consumer market place, partly due to progressive price reductions. Color digital cameras typically employ a single optical sensor, either a Charge Coupled device (CCD) or a Complementary Metal Oxide Semiconductor (CMOS) sensor, to digitally capture a scene of interest. Both CCD and CMOS sensors are only sensitive to illumination. Consequently, these sensors cannot discriminate between different colors. In order to achieve color discrimination, a color filtering technique is applied to separate light in terms of primary colors, typically red, green and blue.

A common filtering technique utilizes a color-filter array (CFA), which is overlaid on the sensor, to separate colors of impinging light in a Bayer pattern. A Bayer pattern is a periodic pattern with a period of two different color pixels in each dimension (vertical and horizontal). In the horizontal direction, a single period includes either a green pixel and a red pixel, or a blue pixel and a green pixel. In the vertical direction, a single period includes either a green pixel and a blue pixel, or a red pixel and a green pixel. Therefore, the number of green pixels is twice the number of red or blue pixels. The reason for the disparity in the number of green pixels is because the human eye is not equally sensitive to these three colors. Consequently, more green pixels are needed to create a color image of a scene that will be perceived as a "true color" image.

Due to the CFA, the image captured by the sensor is therefore a mosaiced image, also called "raw data" image, in which each pixel of the mosaiced image only holds the intensity value for red, green or blue. The mosaiced image can then be demosaiced to create a color image by estimating the missing color values for each pixel of the mosaiced image. The missing color values of a pixel are estimated by using corresponding color information from surrounding pixels.

Although there are a number of conventional demosaicing methods to convert a mosaiced image into a color ("demosaiced") image, the most basic demosaicing method is the bilinear interpolation method. The bilinear interpolation method involves averaging the color values of neighboring pixels of a given pixel to estimate the missing color values for that given pixel. As an example, if a given pixel is missing a color value for red, the red color values of pixels that are adjacent to the given pixel are averaged to estimate the red color value for that given pixel. In this fashion, the missing color values for each pixel of a mosaiced image can be estimated to convert the mosaiced image into a color image.

A concern with the bilinear interpolation method is that the resulting color images are prone to colored artifacts along feature edges of the images. A prior art demosaicing technique of interest that addresses the appearance of colored artifacts utilizes an adaptive interpolation process to estimate one or more missing color values. According to the prior art demosaicing technique, first and second classifiers are first computed to select a preferred interpolation, which includes arithmetic averages and approximated scaled Laplacian second-order terms for the predefined color values. The first and second classifiers can be either horizontal and vertical classifiers, or positive-slope diagonal and negative-slope diagonal classifiers. The classifiers include different color values of nearby pixels along an axis, i.e., the horizontal, vertical, positive-slope diagonal or negative-slope diagonal. The two classifiers are then compared to each other to select the preferred interpolation.

Although the prior art demosaicing technique of adaptive interpolation results in demosaiced color images with reduced colored artifacts along feature edges, there is still a need for a system and method for efficiently demosaicing input mosaiced images to reduce other types of artifacts, such as color aliasing and non-colored "zippering" artifacts along feature edges.

EP 0 632 663 discloses an apparatus and method for adaptively interpolating a full color image. The high frequency information for the "missing green" pixels (i.e., the red and blue pixel locations) are interpolated to improve the luminance rendition. The color difference information is interpolated at the high frequency locations by bilinear methods to generate the other color of the color filter array. "Missing green" pixels are adaptively interpolated either horizontally, vertically or two-dimensionally depending upon the gradient established between the green pixel locations in the vertical and horizontal directions around the "missing green" pixel. The adaptive interpolation interpolates the values of either two or four "real" green pixels in order to produce a green value at a "missing green" pixel. Red and blue chrominance is bilinearly interpolated by reference to color differences (R-G, B-G) from locations in the neighborhood of the interpolated pixels. The color differences are then summed with the luminance's for the interpolated pixels to obtain red and blue.

Kimmel, R "Demosaicing: Image Reconstruction from Color CCD Samples", IEEE Transactions on Image Processing, IEEE Inc New York, US, vol 8, number 9, September 1999, pages 1221-1228, XP002237072, ISSN:

1057-7149 discloses a non-linear image reconstruction algorithm. The algorithm begins by interpolating green at missing points. A loop is then performed three times. During each iteration of the loop, red values are interpolated and green values are corrected.

SUMMARY OF THE INVENTION

A system and method for demosaicing raw data ("mosaiced") images utilizes an asymmetric interpolation scheme to equalize color discontinuities in the resulting demosaiced images using discontinuities of a selected color component of the mosaiced images. Discontinuities of the selected color component are assumed to be equal to discontinuities of the other remaining color components. Thus, color discontinuity equalization is achieved by equating the discontinuities of the remaining color components with the discontinuities of the selected color component. The asymmetric interpolation scheme allows the system and method to reduce color aliasing and non-colored "zippering" artifacts along feature edges of the resulting demosaiced images, as well as colored artifacts.

According to a first aspect of the present invention, there is provided a method of demosaicing a mosaiced image, as set out at claim 1.

In an embodiment, the step of interpolating the first color values may include adaptively interpolating the first color values using an interpolation technique selected from at least a first interpolation technique and a second interpolation technique. The selection of the interpolation technique may include determining variations of the first and second color values along at least a first direction and a second direction, such as a horizontal direction and a vertical direction.

The color discontinuity equalization values are derived by subtracting the averaged first color values from the interpolated first color values. The averaged first color values are derived by sub-sampling the interpolated first color values with respect to pixel locations of the mosaiced image that correspond to the second color values of the mosaiced image to derive sub-sampled values and averaging the sub-sampled values to generate the averaged first color values. The step of interpolating the second color values includes averaging the second color values of the mosaiced image to derive averaged second color values and summing the color discontinuity values and the averaged second color values to derive the second interpolated values.

The method may further include a step of selectively compensating for intensity mismatch between a first type of the first color values and a second type of the first color values. In an embodiment, the selective compensation includes smoothing the first color values of the mosaiced image when gradient and curvature of the first color values are below a threshold. The method may also include a step of sharpening the demosaiced image by operating only on the first interpolated values.

According to a second aspect of the present invention, there is provided a system for demosaicing a mosaiced image, as set out at claim 3.

In an embodiment, the first interpolator includes an adaptive interpolator that is configured to adaptively interpolate the first color values using an interpolation technique selected from at least a first interpolation technique and a second interpolation technique. In one embodiment, the adaptive interpolator includes a gradient direction detector that is configured to determine variations of the first and second color values along at least a first direction and a second direction, such as a horizontal direction and a vertical direction.

The color discontinuity equalization values may be derived by subtracting the averaged first color values from the interpolated first color values. The sub-sampling unit is configured to sub-sample the interpolated first color values with respect to pixel locations of the mosaiced image that correspond to the second color values of the mosaiced image to derive sub-sampled values. The averaging unit is configured to average the sub-sampled values to generate the averaged first color values. The second interpolator includes an averaging unit that is configured to average the second color values of the mosaiced image to derive averaged second color values and a summing unit that is configured to sum the color discontinuity equalization values from the averaged second color values to derive the second interpolated values.

The system may further include an intensity mismatch compensator that is configured to selectively compensate for intensity mismatch between a first type of the first color values and a second type of the first color values. In an embodiment, the intensity mismatch compensator may be configured to smooth the first color values of the mosaiced image when gradient and curvature of the first color values are below a threshold. The system may also include an image sharpener that is configured to sharpen the demosaiced image by operating only on the first interpolated values.

Other aspects and advantages of the present invention will become apparent from the following detailed description, taken in conjunction with the accompanying drawings, illustrated by way of example of the principles of the invention.

BRIEF DESCRIPTION OF THE DRAWINGS

Fig. 1 is a block diagram of an image processing system in accordance with the present invention.

Fig. 2A illustrates the Bayer pattern of captured intensity values in a mosaiced image.

Fig. 2B illustrates the different color planes of a Bayer-patterned mosaiced image.

Fig. 3 is a block diagram a demosaicing unit of the system of Fig. 1.

Fig. 4 is a block diagram of a *G1-G2* mismatch compensator of the demosaicing unit of Fig. 3.

Fig. 5 is a block diagram of an adaptive interpolator of the demosaicing unit.

Fig. 6 is a process flow diagram illustrating the operation of a *G*-path module of the demosaicing.

Fig. 7 is a process flow diagram illustrating the operation of a *G* processing block of a color-path module of the demosaicing unit.

Fig. 8 is a process flow diagram illustrating the operation of an *R* processing block of the color-path module of the demosaicing unit.

Fig. 9 is a block diagram of a *G*-path module with adaptive interpolation and image sharpening capabilities in accordance with an alternative embodiment.

Fig. 10 is a block diagram of a *G*-path module with *G1-G2* mismatch compensation and adaptive interpolation capabilities in accordance with an alternative embodiment of the invention.

Fig. 11 is a block diagram of a *G*-path module with *G1-G2* mismatch compensation, adaptive interpolation, and image sharpening capabilities in accordance with an alternative embodiment.

Fig. 12 is a block diagram of a *G* processing block of a color-path module in accordance with an alternative embodiment of the invention.

Fig. 13 is a block diagram of a *G* processing block of a color-path module in accordance with a simplified alternative embodiment of the invention.

DETAILED DESCRIPTION

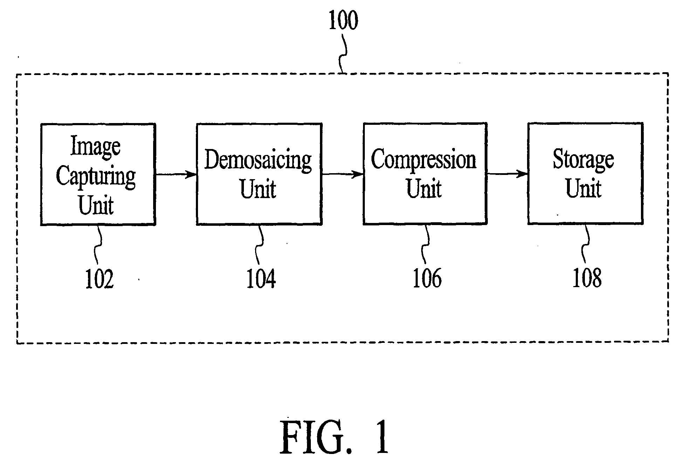

With reference to Fig. 1, an image processing system 100 in accordance with the present invention is shown. The image processing system operates to digitally capture a scene of interest as a mosaiced or raw data image. The mosaiced image is then demosaiced and subsequently compressed for storage by the system. The image processing system utilizes a demosaicing process based on bilinear interpolation that reduces color aliasing and non-colored "zippering" artifacts along feature edges, as well as colored artifacts.

The image processing system 100 includes an image capturing unit 102, a demosaicing unit 104, a compression unit 106, and a storage unit 108. The image capturing unit includes a sensor and a color-filter array (CFA). The sensor may be a Charged Coupled Device (CCD), a Complementary Metal Oxide Semiconductor (CMOS) senor, or other type of photosensitive sensor. In an exemplary embodiment, the CFA includes red (*R*), green (*G*) and blue (*B*) filters arranged in a Bayer filter pattern. However, the CFA may include filters of other colors arranged in a different filter pattern. The CFA operates to allow only light of a particular color to be transmitted to each photosensitive element of the sensor. Thus, a digital image captured by the image capturing unit is a mosaiced image composed of single-colored pixels that are arranged in a color pattern in accordance with the filter patter of the CFA. Consequently, each pixel of the mosaiced image has an intensity value for only a single color, e.g., *R, G* or *B*.

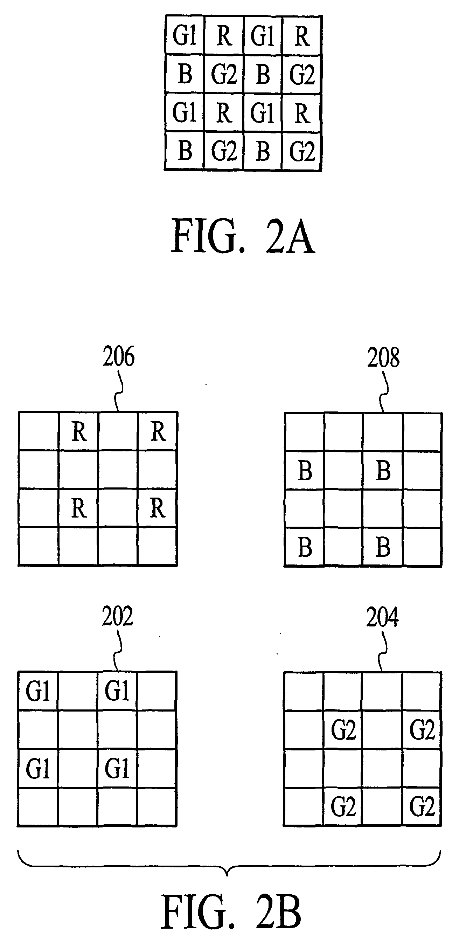

In the exemplary embodiment, the single-colored pixels of the mosaiced images acquired by the image capturing unit 102 are arranged in a Bayer pattern due to the configuration of the CFA of the image capturing unit. A portion of a mosaiced image in a Bayer pattern is illustrated in Fig. 2A. Since each pixel of the mosaiced image has an intensity value for only a single color, each pixel is missing intensity values for the other two colors that are needed to produce a color or demosaiced image. As shown in Fig. 2A, the *G*-colored pixels of the mosaiced image are identified as either *G1* or *G2*. Therefore, the mosaiced image of Fig. 2A can be decomposed with respect to four color components, *R, G1, G2* and *B*, as illustrated in Fig. 2B. These decompositions of a mosaiced image will sometimes be referred herein as *G1* plane 202, *G2* plane 204, *R* plane 206 and *B* plane 208. The *G1* and *G2* planes are collectively referred herein as the *G* plane. In some sensors, the photosensitive elements that capture *G* intensity values at *G1* locations can have a different response than the photosensitive elements that capture *G* intensity.values at *G2* locations. Therefore, the intensity values at *G1* and *G2* locations may have artificial variations due to response differences of the photosensitive elements. These artificial variations will be referred herein as "*G1-G2* mismatch".

The demosaicing unit 104 of the image processing system 100 operates to demosaic an input mosaiced image such that each pixel of the resulting demosaiced image has intensity values for all three primary colors, e.g., *R, G* and *B*, to produce a color or demosaiced image. The demosaicing unit estimates the missing intensity values for each pixel of the input mosaiced image by using available intensity values from surrounding pixels. The demosaicing unit may also perform image sharpening and *G1-G2* mismatch compensation. The operation of the demosaicing unit is described in detail below.

The compression unit 104 of the image processing system 100 operates to compress a demosaiced image, produced by the demosaicing unit 104, to a compressed image file. As an example, the compression unit may compress a demosaiced image using a DCT-based compression scheme, such as the JPEG compression scheme. Although the compression unit and the demosaicing unit are illustrated in Fig. 1 as separate components of the image processing system, these components may be integrated in an application specific integrated chip (ASIC). Alternatively, the compression unit and the demosaicing unit may be embodied as a software program that performs the functions of these units when executed by a processor (not shown).

The storage unit 108 of the image processing system 100 provides a medium to store compressed image files from the compression unit 106. The storage unit may be a conventional storage memory, such as DRAM. Alternatively, the storage unit may be a drive that interfaces with a removable storage medium, such as a standard computer floppy disk.

The image capturing unit 102, the demosaicing unit 104, the compression unit 106, and the storage unit 108 of the system 100 may be included in a single device, such as a digital camera. Alternatively, the image capturing unit may be included in a separate device. In this alternative embodiment, the functions of the demosaicing unit, the compression unit and the storage unit may be performed by a computer.

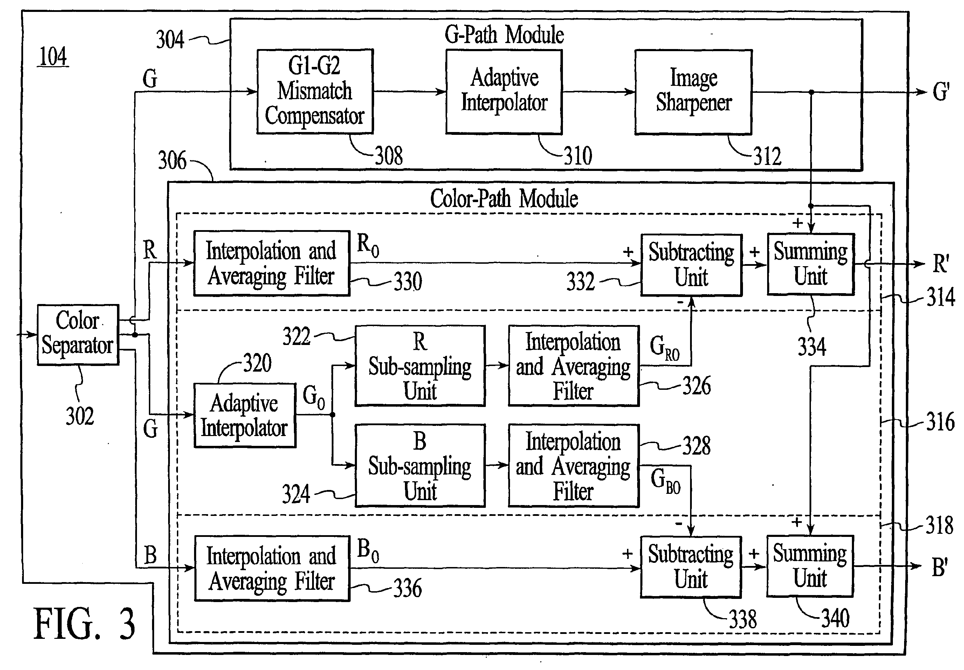

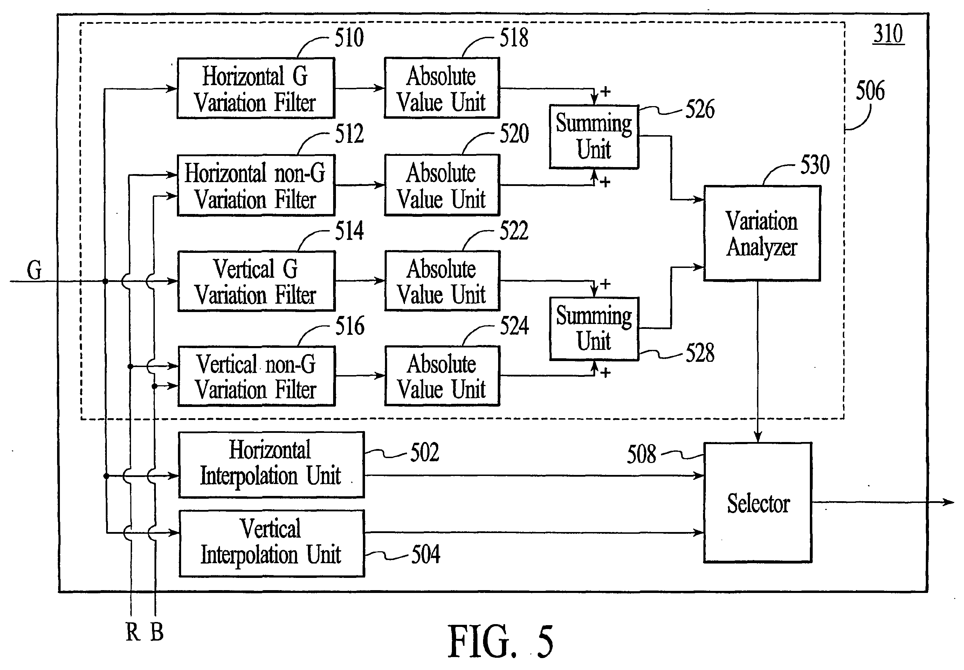

Turning to Fig. 3, a block diagram illustrating the components of the demosaicing unit 104 is shown. As illustrated in Fig. 3, the demosaicing unit includes a color separator 302, a $G$-path module 304 and a color-path module 306. The color separator receives a window of observation of an input mosaiced image, and then separates the intensity values within the observation window with respect to color. Thus, the intensity values are separated in terms of $R$, $G$ and $B$. The $R$ and $B$ intensity values are transmitted to the color-path module, while the $G$ intensity values are transmitted to both the $G$-path module and the color-path module. Although not illustrated in Fig. 3, the $R$ and $B$ intensity value are also transmitted to the $G$-path module, as will be described with respect to Fig. 5. The $G$-path module interpolates the $G$ intensity values of the observation window to generate interpolated $G$ intensity values ("$G'$ values") for each pixel within the observation window of the input mosaiced image, while the color-path module interpolates the $R$ and $B$ intensity values to generate interpolated $R$ and $B$ intensity values ("$R'$ and $B'$ values") for each pixel within the observation window. Consequently, each pixel within the observation window will have $R$, $G$ and $B$ values to produce a demosaiced window that corresponds to the initial window of observation. When all the windows of observation of the input mosaiced image are processed, a complete demosaiced image is produced. In the exemplary embodiment, the $G$-path module also compensates for $G1$-$G2$ mismatch and sharpens the resulting demosaiced image by sharpening a given observation window of an input mosaiced image with respect to only $G$ intensity values. In addition, the color-path module provides color discontinuity equalization by taking into consideration information provided by the $G$ intensity values. Color discontinuity equalization is a process of estimating a spatial discontinuity of a particular color within a mosaiced image by analyzing the discontinuity of another color at the same location of the image.

Color discontinuity equalization is provided by the demosaicing unit 104 by assuming that local color discontinuities within images are same for each color component. That is, changes in local intensity values are the same for $R$, $G$ and $B$ intensity values. This assumption can be expressed as:

$$\Delta R = \Delta G = \Delta B . \qquad (1)$$

If the local color discontinuity of $G$ intensity values is considered to be available throughout an image, the local color discontinuity of $R$ and $B$ intensity values can be expressed with respect to the color discontinuity of $G$ intensity values. The local color discontinuity of $R$ can then be expressed as:

$$\Delta R = \Delta G, \qquad (2)$$

where $\Delta R = R - R_0$ and $\Delta G = G - G_0$. In the above equation, $R_0$ and $G_0$ are the local averages of available $R$ and $G$ intensity values, respectively. Similarly, the local color discontinuity of $B$ can be expressed as:

$$\Delta B = \Delta G, \qquad (3)$$

where $\Delta B = B - B_0$. In equation (3), $B_0$ is the local average of available $B$ intensity values. The equations (2) and (3) can be used to estimate $R$ and $B$ intensity values that equalizes color discontinuity of $G$. That is, equation (2) can be rewritten as:

$$R = R_0 + \Delta G, \text{ and} \qquad\qquad (4)$$

equation (3) can be rewritten as:

$$B = B_0 + \Delta G. \qquad\qquad (5)$$

Note that equations (4) and (5) imply that every color value that is available from the original mosaiced image is kept untouched, since $\Delta G$ equals $\Delta R$ and $\Delta B$. Equation (4) can be further rewritten as:

$$R = G + C_{R0}, \qquad\qquad (6)$$

where $C_{R0} = R_0 - G_0$. In equation (6), $R$ is viewed as being equal to $G$ plus some color offset correction, $C_{R0}$. This color offset correction is precisely equal to the difference between the local averages of $G$ and $R$. Similarly, equation (5) can be rewritten as:

$$B = G + C_{B0},$$

where $C_{B0} = B_0 - G_0$.

In practice, the use of equations (6) and (7) for a demosaicing process produces color "zippering" artifacts along feature edges of demosaiced images. The color offset correction terms are obtained by comparing the local averages of $G$ and $R$, and the local averages of $G$ and $B$. However, the compared averages are not extracted from the same pixel locations. Thus, the color offset correction based on equations (6) and (7) results in a comparison discrepancy, especially in the presence of high intensity gradient, such as on a feature edge. However, if $G$ values are available at all pixel locations, the local averages of $G$ can be calculated at any pixel locations. For best accuracy in the calculation of $C_{R0}$, the $G$ values should be extracted from $R$ locations. Similarly, the $G$ values should be extracted from $B$ locations in the calculation of $C_{B0}$. Thus, equations (6) and (7) can be modified as:

$$R = R_0 + \Delta G_R, \qquad\qquad (8)$$

where $\Delta G_R = G - G_{R0}$, and

$$B = B_0 + \Delta G_B, \qquad\qquad (9)$$

where $\Delta G_B = G - G_{B0}$.

In the above equations, $G_{R0}$ and $G_{B0}$ denote $G$ averages calculated out of $R$ locations and $B$ locations, respectively. The terms, $\Delta G_R$ and $\Delta G_B$ of equation (8) and (9), represent color discontinuity equalization values to equalize color discontinuities of the $R$ and $B$ values with the $G$ values.

The $G$-path module 304 of the demosaicing unit 104 operates on the $G$ intensity values to independently interpolate the $G$ intensity values and to make the $G$ intensity values available at all pixel locations. The color-path module 306 of the demosaicing unit utilizes equations (8) and (9) to generate interpolated $R$ and $B$ intensity values to produce a demosaiced image that has been color discontinuity equalized.

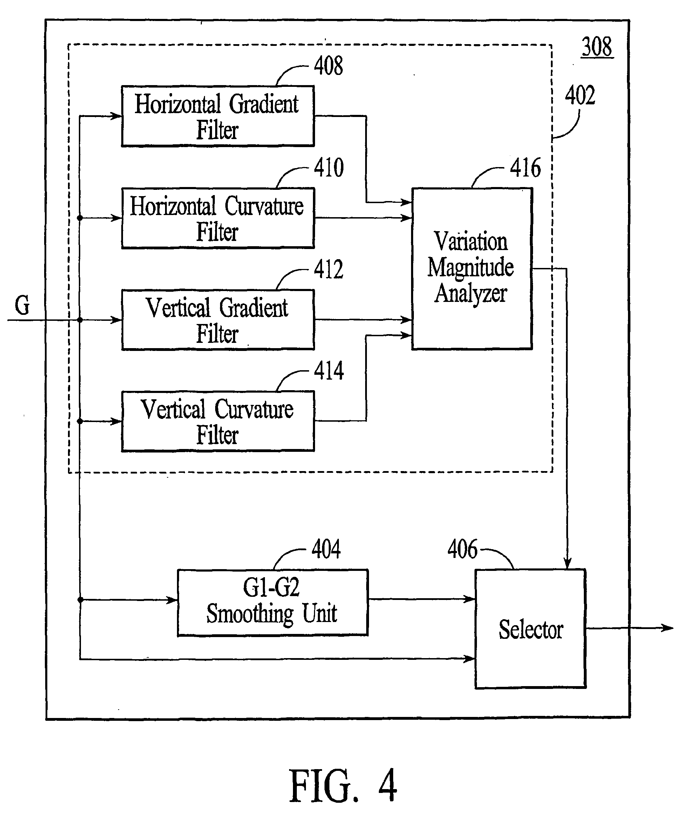

As shown in Fig. 3, the $G$-path module 304 of the demosaicing unit 104 includes a $G1$-$G2$ mismatch compensator 308, an adaptive interpolator 310 and an image sharpener 312. The $G1$-$G2$ mismatch compensator operates selectively smooth intensity value differences at $G1$ and $G2$ pixels caused by $G1$-$G2$ mismatch in regions of an input mosaiced image where there are low intensity variations. As shown in Fig. 4, the $G1$-$G2$ mismatch compensator includes a pixel-wise gradient and curvature magnitude detector 402, a $G1$-$G2$ smoothing unit 404 and a selector 406. The pixel-wise gradient and curvature magnitude detector operates to generate a signal to indicate whether a given window of observation of an input mosaiced image is a region of low intensity with respect to G intensity values. The $G1$-$G2$ smoothing unit performs a convolution using the following mask to smooth the *G* intensity values of the given observation window.

$$\begin{bmatrix} 1/8 & 0 & 1/8 \\ 0 & 1/2 & 0 \\ 1/8 & 0 & 1/8 \end{bmatrix} = \begin{bmatrix} 1 & 4 & 1 \\ 0 & 4 & 0 \\ 1 & 0 & 1 \end{bmatrix}/8$$

The use of the above mask amounts to replacing every *G1* input by the midpoint value between the considered input and the average of the four *G2* neighboring values. The same applies to every *G2* input with respect to their *G1* neighbors.

The signal from the pixel-wise gradient and curvature magnitude detector 402 and the *G1-G2* smoothed *G* intensity values from the *G1-G2* smoothing unit 404 are received by the selector 406. The selector also receives the original *G* intensity values of the current window of observation of the input mosaiced image. Depending on the signal from the pixel-wise gradient and curvature magnitude detector, the selector transmits either the *G1-G2* smoothed *G* intensity values or the original *G* intensity values for further processing.

As shown in Fig. 4, the pixel-wise gradient and curvature magnitude detector 402 includes a horizontal gradient filter 408, a horizontal curvature filter 410, a vertical gradient filter 412, a vertical curvature filter 414, and a variation magnitude analyzer 416. The outputs of the filters 408-414 are fed into the variation magnitude analyzer. The output of the variation magnitude analyzer is fed into the selector 406. The horizontal gradient and horizontal curvature filters 408 and 410 utilize the following masks to derive a horizontal gradient variation value and a horizontal curvature variation value for the *G* intensity values of the observation window of the input mosaiced image.

$$\begin{bmatrix} -1 & 0 & 1 \\ -2 & 0 & 2 \\ -1 & 0 & 1 \end{bmatrix}/2 \qquad\qquad \begin{bmatrix} 1 & 0 & -2 & 0 & 1 \\ 2 & 0 & -4 & 0 & 2 \\ 1 & 0 & -2 & 0 & 1 \end{bmatrix}/2$$

horizontal gradient mask            horizontal curvature mask

The vertical gradient and vertical curvature filters 412 and 414 utilize the following masks to derive a vertical gradient variation value and a vertical curvature variation value for the *G* intensity values of the given observation window.

$$\begin{bmatrix} -1 & -2 & -1 \\ 0 & 0 & 0 \\ 1 & 2 & 1 \end{bmatrix}/2 \qquad\qquad \begin{bmatrix} 1 & 2 & 1 \\ 0 & 0 & 0 \\ -2 & -4 & -2 \\ 0 & 0 & 0 \\ 1 & 2 & 1 \end{bmatrix}/2$$

vertical gradient mask            vertical curvature mask

The variation magnitude analyzer 416 receives the variation values from the horizontal and vertical filters 408-414 and selects the highest variation value, which is identified as the maximum intensity variation magnitude of the current observation window. The maximum intensity variation magnitude is then compared to a predefined threshold to determine whether the *G1-G2* mismatch compensation is necessary. If the maximum intensity variation magnitude exceeds the predefined threshold, then a signal is transmitted to the selector 406 so that the *G1-G2* smoothed *G* intensity values are selected. Otherwise, the variation magnitude analyzer transmits a different signal so that the original *G* intensity values of the current observation window are selected by the selector.

Turning back to Fig. 3, the adaptive interpolator 310 of the *G*-path module 304 is situated to receive the *G* intensity values of the current observation window of the input mosaiced image from the *G1-G2* mismatch compensator 308. The adaptive interpolator operates to selectively apply a horizontal interpolation or a vertical interpolation, depending on the intensity variations within the observation window of the input mosaiced image to estimate the missing *G* intensity values for *R* and *B* pixel locations of the window. The underlying idea of the adaptive interpolator is to perform the horizontal interpolation when the image intensity variation has been detected to be locally vertical, or to perform the vertical interpolation when the image variation has been detected to be locally horizontal.

As shown in Fig. 5, the adaptive interpolator 310 includes a horizontal interpolation unit 502, a vertical interpolation unit 504, a pixel-wise gradient direction detector 506 and a selector 508. The horizontal interpolation unit and the vertical interpolation unit perform a horizontal interpolation and a vertical interpolation, respectively, on the *G* intensity values from the *G1-G2* mismatch compensator 308 using the following masks.

$$\begin{bmatrix} 1/2 & 1 & 1/2 \end{bmatrix} \qquad \begin{bmatrix} 1/2 \\ 1 \\ 1/2 \end{bmatrix}$$

horizontal mask                    vertical mask

The pixel-wise gradient direction detector 506 of the adaptive interpolator 310 determines whether the results of the horizontal interpolation or the results of the vertical interpolation should be selected as the interpolated *G* intensity values. The pixel-wise gradient direction detector includes a horizontal *G* variation filter 510, a horizontal non-*G* variation filter 512, a vertical *G* variation filter 514 and a vertical non-*G* variation filter 516. The *G* variation filters 510 and 514 operate on the *G* intensity values of the current observation window of the input mosaiced image, while the non-*G* variation filters 512 and 516 operate on the *R* and *B* intensity values. The variation filters 510-516 utilize the following mask to derive horizontal and vertical variation values with respect to the *G* intensity values or the non-*G* intensity values for the current observation window of the input mosaiced image.

$$\begin{bmatrix} 1 & -1 & -2 & 1 & 1 \end{bmatrix} \qquad \begin{bmatrix} 1 \\ -1 \\ -2 \\ 1 \\ 1 \end{bmatrix}$$

horizontal variation mask        vertical variation mask

The pixel-wise gradient direction detector 506 also includes absolute value units 518, 520, 522 and 524, summing units 526 and 528 and a variation analyzer 530. Each absolute value unit receives the variation value from one of the variation filters 510-516 and then takes the absolute value to derive a positive variation value, which is then transmitted to one of the summing units 526 and 528. The summing unit 526 adds the positive variation values from the absolute value units 518 and 520 to derive a horizontal variation value, while the summing unit adds 528 the positive variation values from the absolute value units 522 and 524 to derive a vertical variation value. The horizontal and vertical values are then evaluated by the variation analyzer. The variation analyzer determines whether the horizontal value is greater than the vertical value. If so, the variation analyzer sends a signal to direct the selector 508 to transmit the results of the horizontal interpolation. If not, the variation analyzer sends a different signal to direct the selector to transmit the results of the vertical interpolation.

The horizontal value and the vertical value derived by the pixel-wise gradient direction detector 506 include curvature and gradient information. At a *G* location of an input mosaiced image, the coefficients of the horizontal mask that are involved in the convolution of *G* intensity values is [1 0 -2 0 1], while the coefficients of the horizontal mask that are involved in the convolution of non-*G* intensity values, i.e., *R* and *G* intensity values, is [0 -1 0 1 0]. Therefore, at a *G* location, the curvature is given by the *G* intensity values and the gradient is given by the non-*G* intensity values. In contrast, at a non-*G* location, the curvature is given by the non-G intensity values and the gradient is given by the *G* intensity values. However, this alternating role of the *G* intensity values and the non-*G* intensity values does not affect the detection of the dominant image variation direction since only the sum of the gradient and the curvature is needed. The same reasoning applies to the vertical variation value.

Turing back to Fig. 3, the image sharpener 312 of the *G*-path module 304 is situated to receive the interpolated *G* intensity values from the adaptive interpolator 310. The image sharpener operates to improve the global image quality by applying the following sharpening mask to only the *G* intensity values of the current window of observation of the mosaiced image.

$$\begin{bmatrix} 0 & 0 & 0 \\ 0 & 1 & 0 \\ 0 & 0 & 0 \end{bmatrix} + \begin{bmatrix} -1 & -1 & -1 \\ -1 & 8 & -1 \\ -1 & -1 & -1 \end{bmatrix} / 8$$

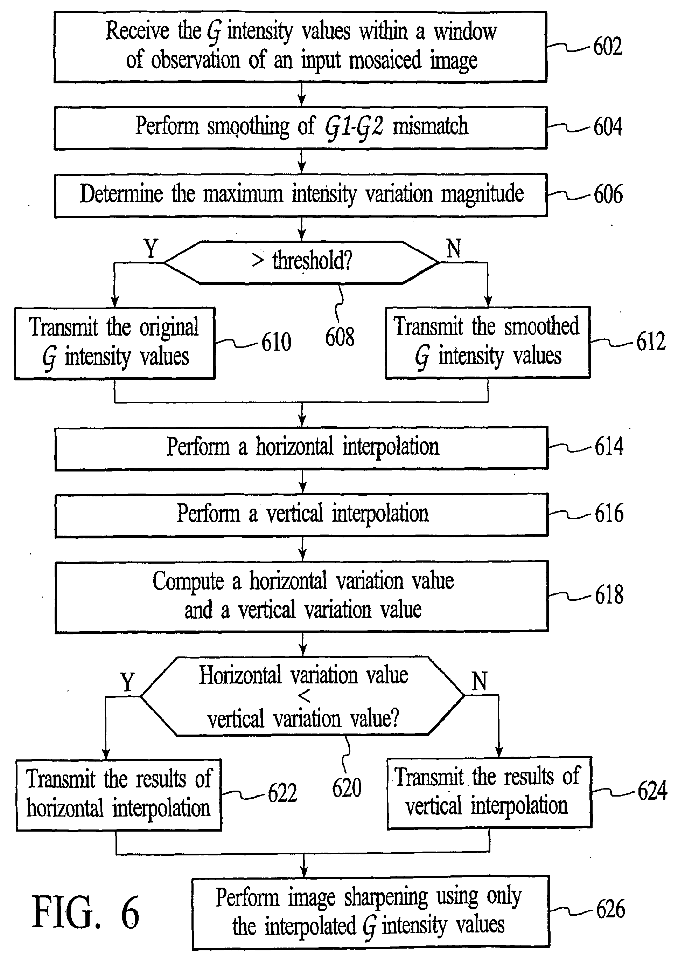

The overall operation of the *G*-path module 304 of the demosaicing unit 104 is described with reference to Fig. 6. At step 602, the *G* intensity values within a window of observation of an input mosaiced image are received by the *G*-path module. Next, at step 604, a smoothing of *G1* and *G2* intensity differences is performed on the received *G* intensity values by the *G1-G2* smoothing unit of the *G1-G2* mismatch compensator 308 to derive *G1-G2* compensated intensity values. At step 606, the maximum intensity variation magnitude of the observation window is determined by the variation magnitude analyzer 416 of the *G1-G2* mismatch compensator from the variation values generated by the horizontal gradient filter 408, the horizontal curvature filter 410, the vertical gradient filter 412 and the vertical curvature filter 414 of the *G1-G2* mismatch compensator. At step 608, a determination is made whether the maximum intensity variation magnitude is greater than a predefined threshold. If so, the current window of observation is determined to be a region of high intensity variation, where *G1-G2* mismatch compensation (smoothing of *G1* and *G2* intensity differences) should not be performed. Thus, the process proceeds to step 610, at which the original *G* intensity values are transmitted for further processing. However, if the maximum intensity variation magnitude is not greater than the threshold, the current window of observation is determined to be a region of low intensity variation, where *G1-G2* mismatch compensation should be performed. Thus, the process proceeds to step 612, at which the *G1-G2* compensated intensity values are transmitted for further processing.

Next, at step 614, a horizontal interpolation is performed by the horizontal interpolation unit 502 of the adaptive interpolator 310. Similarly, at step 616, a vertical interpolation is performed by the vertical interpolation unit 504 of the adaptive interpolator. Next, at step 618, a horizontal variation value is computed by the horizontal *G* variation filter 510, the horizontal non-*G* variation filter 512, the absolute value units 518 and 520 and the summing unit 526 of the adaptive interpolator. In addition, a vertical variation value is computed by the vertical *G* variation filter 514, the vertical non-*G* variation filter 516, the absolute value units 522 and 524 and the summing unit 528 of the adaptive interpolator. Steps 614, 616 and 618 are preferably performed in parallel. At step 620, a determination is made whether the horizontal variation value is greater than the vertical variation value. If so, the results of the horizontal interpolation are transmitted for further processing, at step 622. If not, the results of the vertical interpolation are transmitted for further processing, at step 624. Next, at step 626, image sharpening is performed by the image sharpener 312 of the *G*-path module 304 by applying a sharpening mask to the interpolated *G* intensity values.

In the exemplary embodiment, the *G*-path module 304 of the demosaicing unit 104 includes both the *G1-G2* mismatch compensator 308 and the image sharpener 312. However, one or both of these components of the *G*-path module may be removed from the *G*-path module. As an example, if *G1-G2* mismatch is not a significant factor for mosaiced images produced by the image capturing unit 102 of the system 100, the *G1-G2* mismatch compensator may not be included in the *G*-path module. Thus, the *G1-G2* mismatch compensator and the image sharpener are optional components of the *G*-path module.

The output of the *G*-path module 304 of the demosaicing unit 104 is a set of final interpolated G intensity values ("*G'* values"). As will be described below, the outputs of the color-path module 306 are a set of final interpolated *R* intensity value ("*R'* values") and a set of final interpolated *B* intensity values ("*B'* values"). These intensity values represent color components of a demosaiced color image. Using equations (8) and (9), the *R'* and *B'* values of the demosaiced image produced by the color-path module include color discontinuity equalization components that provide discontinuity equalization of the *R* and *B* components of the demosaiced image with respect to the *G* component of the image.

As shown in Fig. 3, the color-path module 306 of the demosaicing unit 104 includes an *R* processing block 314, a *G* processing block 316 and a *B* processing block 318. Each of these blocks operates on only one of the color planes of the current observation window of the input mosaiced image. For example, the *R* processing block operates only on the *R* plane of the observation window. However, as described below, results from the *G* processing block are used by the *R* and *B* processing blocks to introduce color correlation between the different color planes for color discontinuity equalization. Thus, the *G* processing block of the color-path module is described first.

The *G* processing block 316 of the color-path module 306 includes an adaptive interpolator 320, an *R* sub-sampling unit 322, a *B* sub-sampling unit 324 and interpolation and averaging filters 326 and 328. The adaptive interpolator 320 is identical to the adaptive interpolator 310 of the *G*-path module 304. Thus, the adaptive interpolator 320 of the *G*-processing block operates on the *G* intensity values of an observation window of an input mosaiced image to adaptively interpolate the *G* intensity values to derive missing *G* intensity values for the *R* locations and *B* locations of the observation window. The *R* sub-sampling unit operates to sub-sample the interpolated *G* intensity values ("$G_0$ values") from the adaptive interpolator 320 in terms of *R* locations of the observation window. That is, the $G_0$ values are sub-sampled at *R* locations of the observation window of the input mosaiced image to derive *R* sub-sampled $G_0$ values. Similarly, the *B* sub-sampling unit sub-samples the $G_0$ values in terms of *B* locations of the observation window to derive *B* sub-sampled $G_0$ values. The interpolation and averaging filter 326 then interpolates and averages the *R* sub-sampled $G_0$ values using the following averaging mask.

$$\begin{bmatrix} 1 & 2 & 2 & 2 & 1 \\ 2 & 4 & 4 & 4 & 2 \\ 2 & 4 & 4 & 4 & 2 \\ 2 & 4 & 4 & 4 & 2 \\ 1 & 2 & 2 & 2 & 1 \end{bmatrix} / 16$$

Similarly, the interpolation and averaging filter 328 interpolates and averages the *B* sub-sampled $G_0$ values using the same averaging mask. From the interpolation and averaging filters 326 and 328, the *R* sub-sampled and interpolated $G_0$ values ("$G_{R0}$ values") are sent to the *R* processing block 314, while the *B* sub-sampled and interpolated $G_0$ values ("$G_{B0}$ values") are sent to the *B* processing block 318.

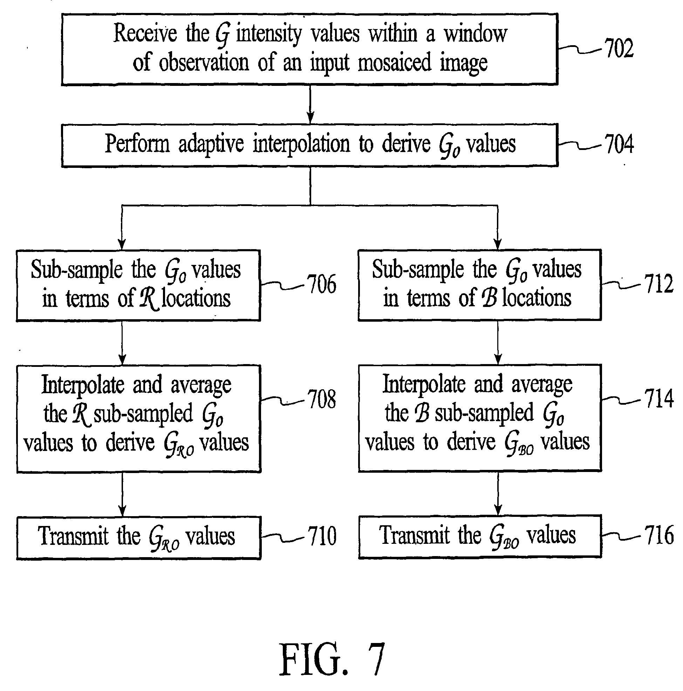

The operation of the *G* processing block 316 of the color-path module 306 is described with reference to Fig. 7. At step 702, the *G* intensity values within a window of observation of an input mosaiced image are received by the adaptive interpolator 320 of the *G* processing block. Next, at step 704, an adaptive interpolation is performed on the *G* intensity values by the adaptive interpolator 320. The results of the adaptive interpolation is derived from either horizontal interpolation or vertical interpolation, depending on the horizontal and vertical variation values associated with the *G* intensity values of the current observation window. The process then separates into two parallel paths, as illustrated in Fig. 7. The first path includes steps 706, 708 and 710. At step 706, the $G_0$ values are sub-sampled in terms of *R* locations of the observation window by the *R* sub-sampling unit 322 of the *G* processing block. The *R* sub-sampled $G_0$ values are then interpolated and averaged by the interpolation and averaging filter 326 to derive $G_{R0}$ values, at step 708. Next, at step 710, the $G_{R0}$ values are transmitted to the *R* processing block 314. The second path includes steps 712, 714 and 716. At step 712, the $G_0$ values are sub-sampled in terms of *B* locations by the *B* sub-sampling unit 324. The *B* sub-sampled $G_0$ values are then interpolated and averaged by the interpolation and averaging filter 328 to derive $G_{B0}$ values, at step 714. Next, at step 716, the $G_{B0}$ values are transmitted to the *B* processing block 318. Steps 706-710 are preferably performed in parallel to steps 712-716.

The *R* processing block 314 of the color-path module 314 includes an interpolation and averaging filter 330, a subtraction unit 332 and a summing unit 334. The interpolation and averaging filter 330 interpolates and averages the *R* intensity values of the current observation window of the input mosaiced image using the same averaging mask as the interpolation and averaging filters 326 and 328 of the *G* processing block 316. The subtraction unit then receives the averaged *R* values ("$R_0$ values"), as well as the $G_{R0}$ values from the interpolation and averaging filter 326 of the *G* processing block. For each pixel of the observation window, the subtraction unit subtracts the $G_{R0}$ value from the corresponding $R_0$ value to derive a subtracted value ("$R_0$-$G_{R0}$ value"). The summing unit then receives the $R_0$-$G_{R0}$ values from the subtraction unit, as well as the *G'* values from the *G*-path module 304. For each pixel of the observation window, the summing unit adds the $R_0$-$G_{R0}$ value and the corresponding *G'* value to derive a final interpolated *R* intensity value ("*R'* value"). These *R'* values represent the *R* component of the demosaiced image.

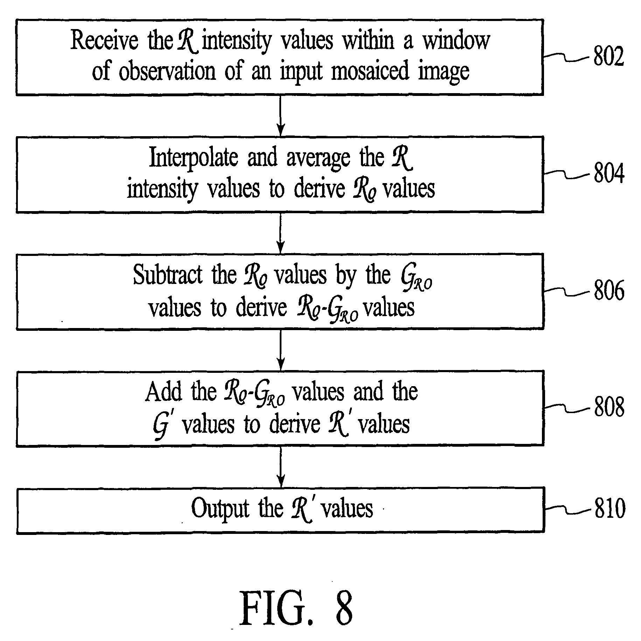

The operation of the *R* processing block 314 of the color-path module 306 is described with reference to Fig. 8. At step 802, the *R* intensity values within a window of observation of an input mosaiced image are received by the interpolation and averaging filter 330 of the *R* processing block. Next, at step 804, the *R* intensity values are interpolated and averaged by the interpolation and averaging filter 330. At step 806, the R0 values are subtracted by the $G_{R0}$ values from the interpolation and averaging filter 326 of the *G* processing block 316 by the subtraction unit 332 of the *R* processing block. Next, at step 808, the $R_0$-$G_{R0}$ values from the subtraction unit are added to the *G'* values from the *G* path module 304 by the summing unit 334 to derive the *R'* values of the observation window. The *R'* values are then outputted from the *R* processing block, at step 810.

Similar to the *R* processing block 314, the *B* processing block 318 of the color-path module 306 includes an interpolation and averaging filter 336, a subtraction unit 338 and a summing unit 340. The interpolation and averaging filter 336 interpolates and averages the *B* intensity values within a given window of observation of an input mosaiced image using the same averaging mask as the interpolation and averaging filter 330 of the *R* processing block. The subtraction unit 338 then receives the averaged *B* values ($B_0$ values"), as well as the $G_{B0}$ values from the averaging unit 328 of the *G* processing block 316. For each pixel of the observation window, the subtraction unit 338 subtracts the $G_{B0}$ value from the corresponding $B_0$ value to derive a subtracted value ("$B_0$-$G_{B0}$ value"). The summing unit 340 then receives the $R_0$-$G_{B0}$ values from the subtraction unit, as well as the *G'* values from the *G*-path module 304. For each pixel of the observation window, the summing unit 340 adds the $R_0$-$G_{B0}$ value and the corresponding *G'* value to derive a final *B* interpolated value ("*B'* value"). These *B'* values represent the *B* component of the demosaiced image. The operation of the *B* processing block is similar to the operation of the *R* processing block, and thus, is not be described herein.

From the above description of the color-path module 306, it can be seen that the *G* processing block 316 and the subtraction and summing units 332, 334, 338 and 340 of the *R* and *B* processing blocks 314 and 318 operate to factor in color discontinuity equalization values, i.e., $\Delta G_R$ and $\Delta G_B$ of equation (8) and (9), into the $R_0$ and $B_0$ values of an input mosaiced image to generate *R'* and *B'* values that results in a demosaiced image with equalized color discontinuities. The color discontinuity equalization values for the *R* component of the input mosaiced image are added to the $R_0$ values by first subtracting $G_{R0}$ values generated by the *G* processing block from the $R_0$ values and then adding the *G'* values generated from the *G*-path module 304. Similarly, the color discontinuity equalization values for the *B* component of the input mosaiced image are added to the $B_0$ values by first subtracting $G_{B0}$ values generated by the *G* processing block from the $R_0$ values and then adding the *G'* values generated from the *G*-path module 304.

In an ASIC implementation, as well as other types of implementations with a limited memory capacity, a desired feature of the demosaicing unit 104 is that all the necessary convolutions are performed in parallel during a single stage of the image processing. Multiple stages of convolution typically require intermediate line buffers, which increase the cost of the system. Another desired feature is that the demosaicing unit operates on small-sized convolution windows. The size of the convolution window determines the number of line buffers that are needed. Thus, a smaller convolution window is desired for reducing the number of line buffers. Still another desired feature is the use of averaging masks that are larger than 3x3. Using 3x3 averaging masks produces unsatisfactory demosaiced images in terms of color aliasing. Thus, the size of the masks should be at least 5x5. Below are alternative embodiments of the *G*-path module 304 and the *G* processing block 316 of the color-path module 306 that allow the above-described features to be realized.

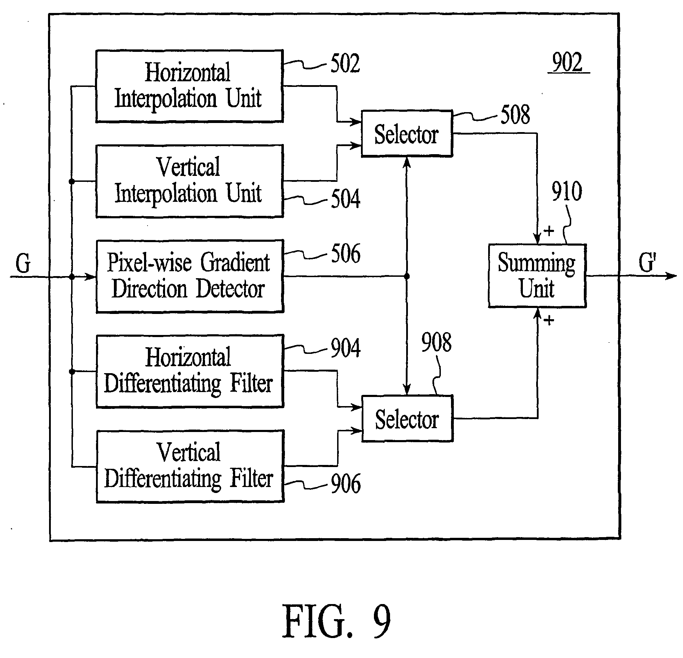

In Fig. 9, a *G*-path module 902 with adaptive interpolation and image sharpening capabilities is shown. The *G*-path module 902 is functionally equivalent to the *G*-path module 304 of Fig. 3 that includes only the adaptive interpolator 310 and the image sharpener 312. As shown in Fig. 9, the *G*-path module 902 includes the horizontal interpolation unit 502, the vertical interpolation unit 504, the pixel-wise gradient direction detector 506 and the selector 508. These components 502-508 of the *G*-path module 902 are the same components found in the adaptive interpolator 310 of Fig. 3, which are shown in Fig. 5. The components 502-508 operate to transmit the results of the horizontal interpolation or the results of the vertical interpolation, depending on the determination of the pixel-wise gradient direction detector 508.

The *G*-path module 902 of Fig. 9 also includes a horizontal differentiating filter 904, a vertical differentiating filter 906, a selector 908 and a summing unit 910. These components 904-910 of the *G*-path module operate to approximate the image sharpening performed by the image sharpener 312 of the *G*-path module 304 of Fig. 3. The operation of the adaptive interpolator 310 and the image sharpener 312 of the *G*-path module 304 of Fig. 3 can be seen as applying a horizontal or vertical interpolation mask on the given *G* intensity values and then applying a sharpening mask. The sharpening operation can be interpreted as adding a differential component to the non-interpolated intensity values. Therefore, the combined interpolation and sharpening mask can be decomposed as follows.

$$\begin{bmatrix} \text{horizontal} \\ \text{interpolation} \\ \text{mask} \end{bmatrix} * \begin{bmatrix} \text{sharpening} \\ \text{mask} \end{bmatrix} = \begin{bmatrix} \text{horizontal} \\ \text{interpolation} \\ \text{mask} \end{bmatrix} + \begin{bmatrix} \text{horizontal} \\ \text{differential} \\ \text{mask} \end{bmatrix},$$

and

$$\begin{bmatrix} \text{vertical} \\ \text{interpolation} \\ \text{mask} \end{bmatrix} * \begin{bmatrix} \text{sharpening} \\ \text{mask} \end{bmatrix} = \begin{bmatrix} \text{vertical} \\ \text{interpolation} \\ \text{mask} \end{bmatrix} + \begin{bmatrix} \text{vertical} \\ \text{differential} \\ \text{mask} \end{bmatrix},$$

where

$$\begin{bmatrix} \text{horizontal} \\ \text{differential} \\ \text{imask} \end{bmatrix} = \begin{bmatrix} 0 & 0 & 0 & 0 & 0 \\ -1 & -3 & -4 & -3 & -1 \\ -1 & 6 & 14 & 6 & -1 \\ -1 & -3 & -4 & -3 & -1 \\ 0 & 0 & 0 & 0 & 0 \end{bmatrix} / 16,$$

and

$$\begin{bmatrix} \text{vertical} \\ \text{differential} \\ \text{mask} \end{bmatrix} = \begin{bmatrix} 0 & -1 & -1 & -1 & 0 \\ 0 & -3 & 6 & -3 & 0 \\ 0 & -4 & 14 & -4 & 0 \\ 0 & -3 & 6 & -3 & 0 \\ 0 & -1 & -1 & -1 & 0 \end{bmatrix} / 16.$$

Therefore, the components 904-910 of the $G$-path module 902 operate to selectively add the appropriate differential component to the interpolated $G$ intensity values. The horizontal and vertical differentiating filters 904 and 906 independently operate on the $G$ intensity values within the given observation window of the input mosaiced image using the horizontal and vertical differential masks, respectively. The selector 908 transmits either the results of the vertical sharpening or the results of the horizontal sharpening, depending on the determination of the pixel-wise gradient direction detector 506. In one scenario, the results of the horizontal interpolation and the horizontal sharpening are combined by the summing unit 910 to generate the $G'$ values. In another scenario, the results of the vertical interpolation and the vertical sharpening are combined by the summing unit 910 to generate the $G'$ values. However, the interpolation and sharpening performed by the $G$-path module 902 of Fig. 9 generally does not yield the same $G'$ values generated by an equivalent $G$-path module of Fig. 3 that includes only the adaptive interpolator 310 and the image sharpener 312, which would sequentially perform the adaptive interpolation and the image sharpening. For the $G$-path module 902 of Fig. 9, the output values of the sharpening convolution are derived from the original $G$ intensity values, while the output values of the sharpening convolution for the equivalent $G$-path module of Fig. 3 are derived from either the horizontal interpolated $G$ intensity values or the vertical interpolated $G$ intensity values. However, this difference does not produce significant artifacts in the demosaiced image.

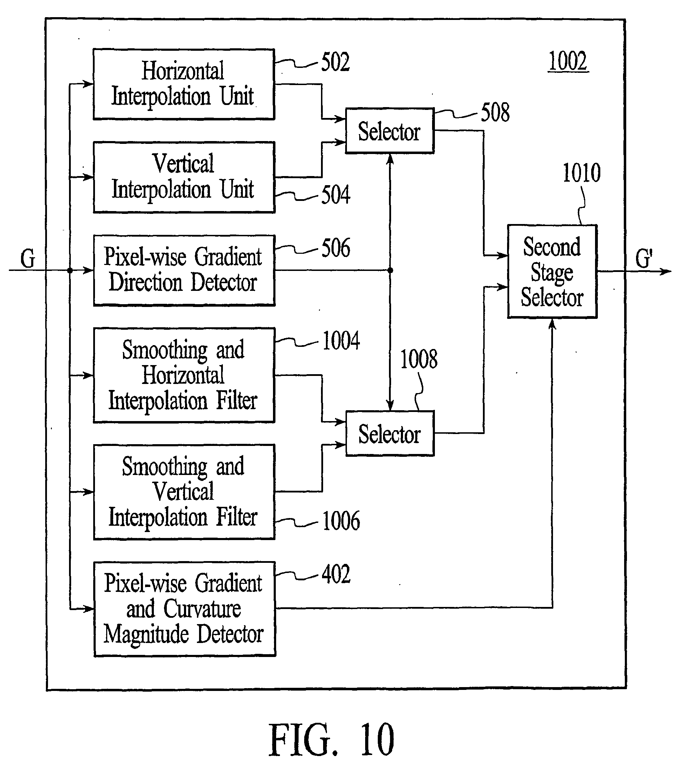

In Fig. 10, a $G$-path module 1002 with $G1$-$G2$ mismatch compensation and adaptive interpolation capabilities is shown. The G-path module 1002 is functionally equivalent to the $G$-path module 304 of Fig. 3 that includes only the $G1$-$G2$ mismatch compensator 308 and the adaptive interpolator 310. As shown in Fig. 10, the $G$-path module 1002 includes the horizontal interpolation unit 502, the vertical interpolation unit 504, the pixel-wise gradient direction detector 506 and the selector 508. These components 502-508 of the $G$-path module 1002 are the same components found in the adaptive interpolator 310 of Fig. 3, which are shown in Fig. 5. The components 502-508 operate to transmit the results of the horizontal interpolation or the results of the vertical interpolation, depending on the determination of the pixel-wise gradient direction detector 508.

The $G$-path module 1002 of Fig. 10 also includes a smoothing and horizontal interpolation filter 1004, a smoothing and vertical interpolation filter 1006, a selector 1008, a second stage selector 1010, and the pixel-wise gradient and curvature magnitude detector 402. The filters 1004 and 1006 perform both adaptive interpolation and $G1$-$G2$ mismatch compensation in a single stage process. The filters 1004 and 1006 operate on the $G$ intensity values using the following masks.

$$\begin{bmatrix} 0 & 0 & 0 & 0 & 0 \\ 1 & 2 & 2 & 2 & 1 \\ 0 & 4 & 8 & 4 & 0 \\ 1 & 2 & 2 & 2 & 1 \\ 0 & 0 & 0 & 0 & 0 \end{bmatrix}/16 \qquad \begin{bmatrix} 0 & 1 & 0 & 1 & 0 \\ 0 & 2 & 4 & 2 & 0 \\ 0 & 2 & 8 & 2 & 0 \\ 0 & 2 & 4 & 2 & 0 \\ 0 & 1 & 0 & 1 & 0 \end{bmatrix}/16$$

horizontal interpolation and          vertical interpolation and

$G1$-$G2$ smoothing mask                $G1$-$G2$ smoothing mask

The selector 1008 transmits the results of either the horizontal interpolation and $G1$-$G2$ smoothing or the vertical interpolation and $G1$-$G2$ smoothing to the second stage selector, depending on the determination by the pixel-wise gradient direction detector. The second stage selector also receives the results of either the horizontal interpolation or the vertical interpolation from the selector 508. The second stage selector transmits the output values from the selector 508 or the output values from the selector 1008 for further processing, depending on the determination made by the pixel-wise gradient and curvature magnitude detector.

Similar to the $G$-path module 902 of Fig. 9, the $G$-path module 1002 of Fig. 10 generally does not yield the same $G'$ values generated by an equivalent $G$-path module of Fig. 3 that includes only the $G1$-$G2$ mismatch compensator 308 and the adaptive interpolator 310, which would sequentially perform the $G1$-$G2$ smoothing and the adaptive interpolation. However, this difference again does not produce significant artifacts in the demosaiced image.

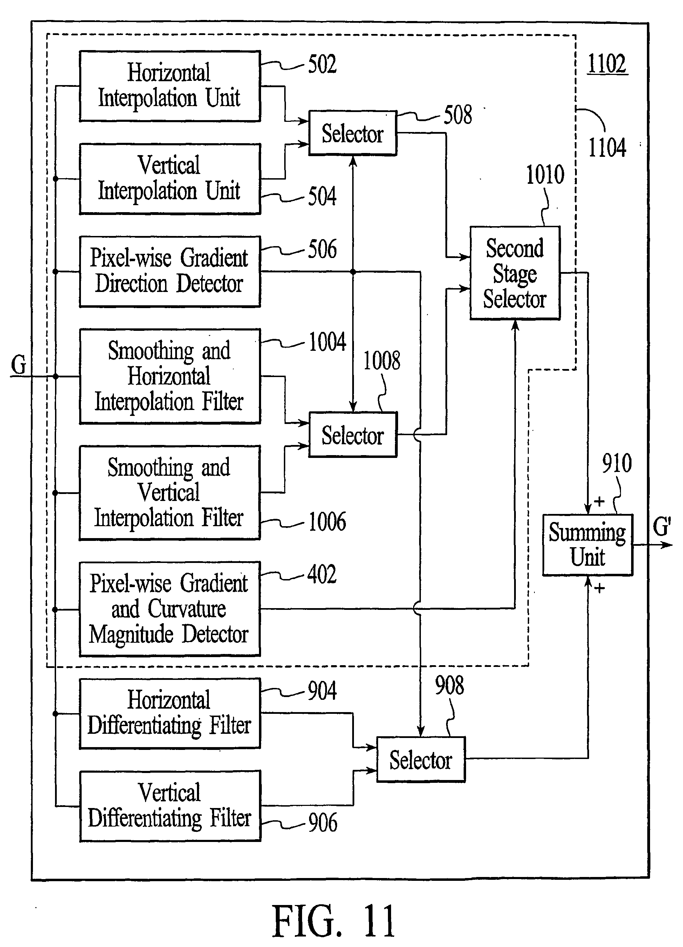

In Fig. 11, a $G$-path module 1102 with $G1$-$G2$ mismatch compensation, adaptive interpolation and sharpening capabilities is shown. The $G$-path module 1102 is functionally equivalent to the $G$-path module 304 of Fig. 3. As shown in Fig. 11, the $G$-path module 1102 includes all the components of the $G$-path module 902 of Fig. 9 and the $G$-path module 1002 of Fig. 10. The components contained in the dotted box 1104 are all the components of the $G$-path module 1002 of Fig. 10. These components 502-508 and 1004-1010 generate the $G$ intensity values that are the result of $G1$-$G2$ smoothing and the adaptive interpolation. The $G$-path module 1002 of Fig. 11 also includes the horizontal differentiating filter 904, the vertical differentiating filter 906, the selector 908 and the summing unit 910. These components 904-910 generate the horizontal and vertical sharpening differential component values. The $G$ intensity values from the second stage selector 1010 are added to either the horizontal differential component values or the vertical differential component values from the selector 908 by the summing unit, depending on the determination of the pixel-wise gradient direction detector. In order to ensure that $G1$-$G2$ mismatches do not corrupt the calculation of the differential component values, the following differential masks are used by the horizontal and vertical differentiating filters 904 and 906.

$$\begin{bmatrix} -1 & -2 & -1 \\ 0 & 0 & 0 \\ 2 & 4 & 2 \\ 0 & 0 & 0 \\ -1 & -2 & -1 \end{bmatrix}/8 \qquad \begin{bmatrix} -1 & 0 & 2 & 0 & -1 \\ -2 & 0 & 4 & 0 & -2 \\ -1 & 0 & 2 & 0 & -1 \end{bmatrix}/8$$

horizontal differential mask          vertical differential mask

These masks are designed to only "read" either the $G1$ values or the $G2$ values. In general, $G1$-$G2$ mismatches result in an offset between the local averages of $G1$ and $G2$, respectively. However, $G1$-$G2$ mismatches contribute little to the discrepancies between their respective variations. Consequently, the outputs of such masks are generally insensitive to $G1$-$G2$ mismatches.

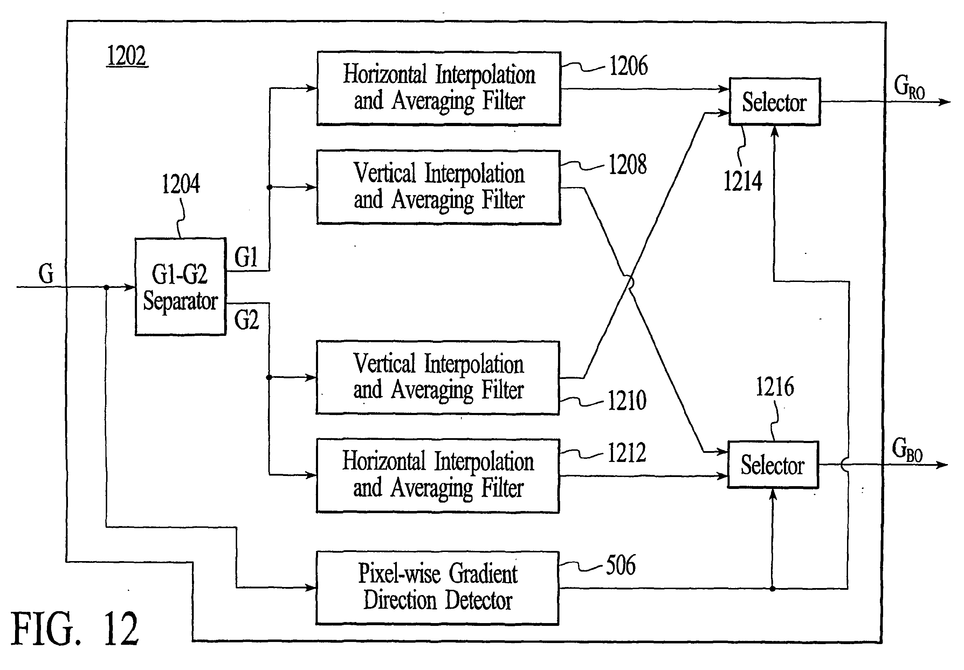

In Fig. 12, a $G$ processing block 1202 for the color-path module 306 of Fig. 3 in accordance with an alternative embodiment of the invention (for ASIC implementation) is shown. The $G$ processing block 1202 is functionally equivalent to the $G$ processing block 316 of the color-path module 306 of Fig. 3. As shown in Fig. 12, the $G$ processing block 1202 includes a $G1$-$G2$ separator 1204 that separates the $G$ intensity values into $G1$ and $G2$ values. The $G$ processing block 1202 further includes a horizontal interpolation and averaging filter 1206, a vertical interpolation and averaging filter 1210, the pixel-wise gradient direction detector 506, and a selector 1214. These components operate to produce $G_{R0}$ values for a given observation window of an input mosaiced image. The G processing block also includes a horizontal interpolation and averaging filter 1212, a vertical interpolation and averaging filter 1208, and a selector 1216. These components along with the pixel-wise gradient direction detector 506 operate to produce $G_{B0}$ values for the current observation window.

The horizontal interpolation and averaging filter 1206 utilizes the following mask on the G1 values to generate "horizontal component" $G_{R0}$ values that approximate the $G_{R0}$ values generated by the G processing block 316 of the color-path module of Fig. 3 when the horizontal interpolation has been applied.

$$\begin{bmatrix} 1/2 & 0 & 1/2 \end{bmatrix} * \begin{bmatrix} \text{averaging} \\ \text{mask} \end{bmatrix},$$

where the averaging mask is as follows:

$$\begin{bmatrix} 1 & 2 & 2 & 2 & 1 \\ 2 & 4 & 4 & 4 & 2 \\ 2 & 4 & 4 & 4 & 2 \\ 2 & 4 & 4 & 4 & 2 \\ 1 & 2 & 2 & 2 & 1 \end{bmatrix} /16$$

Thus, the mask used by the horizontal interpolation and averaging filter 1206 is a 7x7 mask as follows:

$$\begin{bmatrix} 0 & 0 & 0 & 0 & 0 & 0 & 0 \\ \frac{1}{2} & 1 & 1\frac{1}{2} & 2 & 1\frac{1}{2} & 1 & \frac{1}{2} \\ 1 & 2 & 3 & 4 & 3 & 2 & 1 \\ 1 & 2 & 3 & 4 & 3 & 2 & 1 \\ 1 & 2 & 3 & 4 & 3 & 2 & 1 \\ \frac{1}{2} & 1 & 1\frac{1}{2} & 2 & 1\frac{1}{2} & 1 & \frac{1}{2} \\ 0 & 0 & 0 & 0 & 0 & 0 & 0 \end{bmatrix} /16$$

In other words, the "horizontal component" $G_{R0}$ values generated by the horizontal interpolation and averaging filter 1206 represent the $G_{R0}$ values generated by the adaptive interpolator 320, the R sub-sampling unit 322 and the interpolation and averaging filter 326 of the G processing block 316 of Fig. 3 when the outputs of the adaptive interpolator 320 are the results of the horizontal interpolation.

The vertical interpolation and averaging filter 1210 utilizes the following mask on the G2 values to generate "vertical component" $G_{R0}$ values that approximate the $G_{R0}$ values generated by the G processing block 316 of Fig. 3 when the vertical interpolation has been applied.

$$\begin{bmatrix} 1/2 \\ 1 \\ 1/2 \end{bmatrix} * \begin{bmatrix} \text{averaging} \\ \text{mask} \end{bmatrix},$$

where the averaging mask is the same mask used by the horizontal interpolation and averaging filter 1206. Thus, the mask used by the vertical and averaging filter 1210 is a 7x7 mask as follows:

$$\begin{bmatrix} 0 & \tfrac{1}{2} & 1 & 1 & 1 & \tfrac{1}{2} & 0 \\ 0 & 1 & 2 & 2 & 1\tfrac{1}{2} & 1 & 0 \\ 0 & 1\tfrac{1}{2} & 3 & 3 & 3 & 1\tfrac{1}{2} & 0 \\ 0 & 2 & 4 & 4 & 4 & 2 & 0 \\ 0 & 1\tfrac{1}{2} & 3 & 3 & 3 & 1\tfrac{1}{2} & 0 \\ 0 & 1 & 2 & 2 & 2 & 1 & 0 \\ 0 & \tfrac{1}{2} & 1 & 1 & 1 & \tfrac{1}{2} & 0 \end{bmatrix} / 16$$

In other words, the "vertical component" $G_{R0}$ values generated by the vertical interpolation and averaging filter 1210 represent the $G_{R0}$ values generated by the adaptive interpolator 320, the $R$ sub-sampling unit 322 and the interpolation and averaging filter 326 of the $G$ processing block of Fig. 3 when the outputs of the adaptive interpolator 320 are the results of the vertical interpolation.

The horizontal interpolation and averaging filter 1212 utilizes the same mask as the horizontal interpolation and averaging filter 1206 to generate "horizontal component" $G_{B0}$ values that approximate the $G_{B0}$ values generated by the $G$ processing block 316 of Fig. 3 when the horizontal interpolation has been applied. Similarly, the vertical interpolation and averaging filter 1210 utilizes the same mask as the vertical interpolation and averaging filter 1208 to generate "vertical component" $G_{B0}$ values that approximate the $G_{B0}$ values generated by the $G$ processing block 316 of Fig. 3 when the vertical interpolation has been applied.

In operation, the $G1$-$G2$ separator 1204 receives the $G$ intensity values within a given window of observation of an input mosaiced image. The $G1$-$G2$ separator transmits the $G1$ values of the $G$ intensity values to the filters 1206 and 1208. In addition, the $G1$-$G2$ separator transmits the $G2$ values of the $G$ intensity values to the filters 1210 and 1212. The horizontal interpolation and averaging filter 1206 generates $G_{R0}$ values that include horizontal interpolated components, while the vertical interpolation and averaging filter 1210 generates $G_{R0}$ values that include vertical interpolated components. These $G_{R0}$ values are received by the selector 1214. The selector then transmits either the $G_{R0}$ values from the horizontal interpolation and averaging filter 1206 or the $G_{R0}$ values from the vertical interpolation and averaging filter 1210, depending on the determination of the pixel-wise gradient direction detector 506.

Operating in parallel to the filters 1206 and 1210, the horizontal interpolation and averaging filter 1212 generates $G_{B0}$ values that include horizontal interpolated components, while the vertical interpolation and averaging filter 1208 generates $G_{B0}$ values that include vertical interpolated components. These $G_{B0}$ values are received by the selector 1216. The selector then transmits either the $G_{B0}$ values from the horizontal interpolation and averaging filter 1212 or the $G_{B0}$ values from the vertical interpolation and averaging filter 1208, depending on the determination of the pixel-wise gradient direction detector 506.

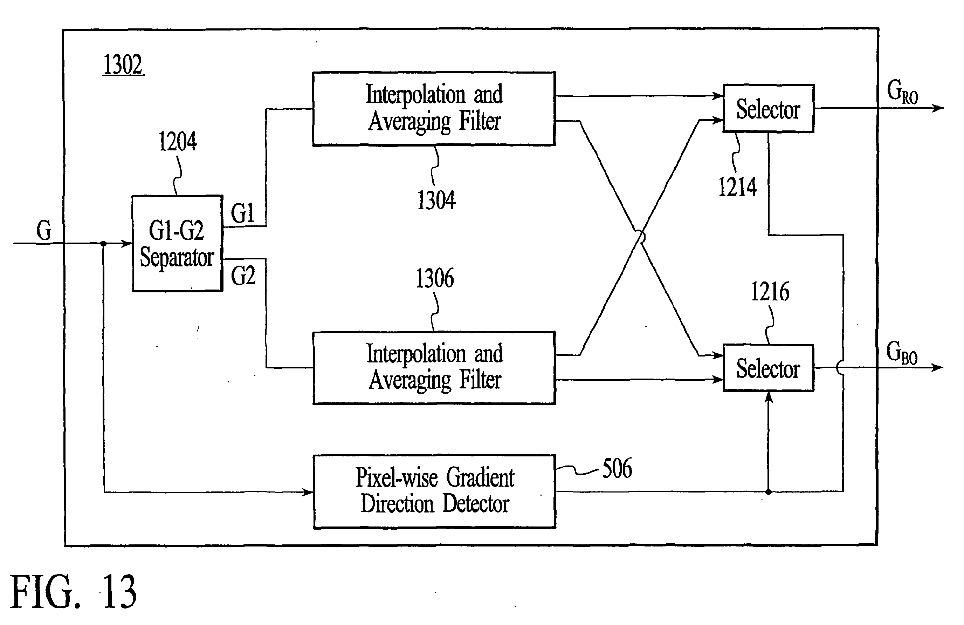

In Fig. 13, a $G$ processing block 1302 having a more simplified configuration than the $G$ processing block 1202 of Fig. 12 is shown. The 7x7 masks used by the filters 1206-1212 of the $G$ processing block 1202 of Fig. 12 are similar to the original 5x5 averaging mask. That is, the central 5x5 portion of the 7x7 masks used by the filters 1206-1212 is similar to the original 5x5 averaging mask. Thus, the $G$ processing block 1302 of Fig. 13 approximates both of these 7x7 masks by the original 5x5 averaging masks. As shown in Fig. 13, the $G$ processing block 1302 includes the $G1$-$G2$ separator 1204, the selectors 1214 and 1216, and the pixel-wise gradient direction detector 506, which are also found in the $G$ processing module 1202 of Fig. 12. The only differences between the $G$ processing modules of Figs. 12 and 13 are that the filters 1206 and 1208 of the $G$ processing module 1202 are replaced by an interpolation and averaging filter 1304 and the filters 1210 and 1212 of the $G$ processing module 1202 are replaced by an interpolation and averaging filter 1306. The interpolation and averaging filter 1304 operates on the $G1$ values of a given window of observation of an input mosaiced image, while the interpolation and averaging filter 1306 operates on the $G2$ values. These interpolation and averaging filters both use the original $5 \times 5$ averaging mask. The output values of the interpolation and averaging filter 1304 represent both the "horizontal component" $G_{R0}$ values and the "vertical component" $G_{B0}$ values. Similarly, the output values of the interpolation and averaging filter 1306 represent both the "horizontal component" $G_{B0}$ values and the "vertical component" $G_{R0}$ values. Depending on the determination of the pixel-wise gradient direction detector 506, the selectors 1214 and 1216 transmit either the "horizontal component" $G_{R0}$ and $G_{B0}$ values or the "vertical component" $G_{R0}$ and $G_{B0}$ values.

As stated previously, the demosaicing unit 104 provides color discontinuity equalization by enforcing the requirement that $\Delta R=\Delta G=\Delta B$. However, when strong color correction is applied after demosaicing, the resulting image is degraded. Under color correction of the type:

$$\begin{bmatrix} R' \\ G' \\ B' \end{bmatrix} = M \cdot \begin{bmatrix} R \\ G \\ B \end{bmatrix}, \qquad (10)$$

where $M$ is a 3×3 matrix, the color discontinuity that will be observed are caused by linearity ($\Delta R'$, $\Delta G'$ or $\Delta B'$), where

$$\begin{bmatrix} \Delta R' \\ \Delta G' \\ \Delta B' \end{bmatrix} = M \cdot \begin{bmatrix} \Delta R \\ \Delta G \\ \Delta B \end{bmatrix}. \qquad (11)$$

However, $\Delta R'$, $\Delta G'$ and $\Delta B'$ will generally not satisfy the requirement that $\Delta R' = \Delta G' = \Delta B'$, which can result in artifacts. Thus, the color discontinuity equalization can be modified to satisfy the requirement of $\Delta R' = \Delta G' = \Delta B'$.

For color discontinuity equalization without color correction consideration, the color discontinuity is given by $\Delta G$ at a fixed pixel at a $G$ location. The equalization is achieved by enforcing the equations, $\Delta R = \Delta G$ and $\Delta B = \Delta G$, for demosaicing. These equations are modified to derive the following equations, which are more general.

$$\Delta R = a \cdot \Delta G \qquad (12)$$

and

$$\Delta B = b \cdot \Delta G, \qquad (13)$$

where $a$ and $b$ are fixed constants. For a given color correction matrix $M$, there exists a couple of unique constants ($a$, $b$) such that the above equations implies:

$$\Delta R' = \Delta G' \qquad (14)$$

and

$$\Delta B' = \Delta G'. \qquad (15)$$

In addition, the couple of constants has a unique expression in terms of the coefficients of $M$. If the coefficients of $M$ are labeled as follows:

$$M = \begin{bmatrix} rr & gr & br \\ gr & gg & gb \\ br & bg & bb \end{bmatrix}, \qquad (16)$$

then it can be shown by linear algebra that the unique solution in ($a$, $b$) has the following expressions.

$$a = -(bg \cdot gb - bb \cdot gg - bg \cdot rb + gg \cdot rb + bb \cdot rg - gb \cdot rg)/D, \qquad (17)$$

and

$$b = -(br \cdot gg - bg \cdot gr - br \cdot rb + gr \cdot rb + bb \cdot rr - gg \cdot rr)/D, \qquad (18)$$

where

$$D = br \cdot gb - bb \cdot gr - br \cdot rb + gr \cdot rb + bb \cdot rr - gb \cdot rr. \qquad (19)$$

Thus, the above expression can be used to provide color discontinuity equalization when demosaicing is followed by a strong color correction. In the case where the pixel is at an $R$ location, the following equations are applied.

$$\Delta G = \frac{1}{a} \cdot \Delta R \qquad (20)$$

and

$$\Delta B = \frac{b}{a} \cdot \Delta R. \qquad (21)$$

Similarly, at a $B$ location, the following equations are applied.

$$\Delta R = \frac{a}{b} \cdot \Delta B \qquad (22)$$

and

$$\Delta G = \frac{1}{b} \cdot \Delta B. \qquad (23)$$

This "color correction-compensated" equalization applies to a demosaicing process that uses equation (6) and (7), which are $R = G + C_{R0}$ and $B = G + C_{B0}$, where $C_{R0} = R_0 - G_0$ and $C_{B0} = B_0 - G_0$. However, for demosaicing process that uses equations (8) and (9), which are $R = R_0 + \Delta G_R$ and $B = B_0 + \Delta G_B$, where $\Delta G_R = G - G_{R0}$ and $\Delta G_B = G - G_{B0}$, color discontinuity equalization needs to be further modified to satisfy the requirements of $\Delta R = \Delta G_R$ and $\Delta B = \Delta G_B$, where $\Delta G_R$ and $\Delta G_B$ are not necessarily equal. Since there are two values for the $G$ color discontinuity, the transformation of color discontinuity as defined by expression (11) cannot be used. Thus, a different approach is used to satisfy the requirements of $\Delta R = \Delta G_R$ and $\Delta B = \Delta G_B$.

For a given pixel location, $\Delta G_R$ and $\Delta G_B$ are assumed to have been calculated. The goal is to find $\Delta R$ and $\Delta B$ such that

$$\Delta R' = \Delta G'_R \qquad (24)$$

and

$$\Delta B' = \Delta G'_B \qquad (25)$$

where

$$\begin{bmatrix} \Delta R' \\ \Delta G'_R \\ \text{dont' care} \end{bmatrix} = M \cdot \begin{bmatrix} \Delta R \\ \Delta G_R \\ \Delta B \end{bmatrix} \qquad (26)$$

and

$$\begin{bmatrix} \text{dont' care} \\ \Delta G'_B \\ \Delta B' \end{bmatrix} = M \cdot \begin{bmatrix} \Delta R \\ \Delta G_B \\ \Delta B \end{bmatrix}. \qquad (27)$$

In order to find a solution, the following equations, which are even more general than equations (12) and (13), are used.

$$\Delta R = a \cdot \Delta G_R + b \cdot \Delta G_B \qquad (28)$$

and

$$\Delta B = c \cdot \Delta G_R + d \cdot \Delta G_B, \qquad (29)$$

where the coefficients (*a, b, c, d*) are fixed constants. Again, it can be shown by linear algebra that by taking

$$\begin{bmatrix} a & b \\ c & d \end{bmatrix} = \begin{bmatrix} (bb - gb) \cdot (gg - rg) & (bg - gg) \cdot (rb - gb) \\ (br - gr) \cdot (rg - gg) & (gg - bg) \cdot (rr - gr) \end{bmatrix} / D,$$

the operations (28) and (29) satisfy equations (24) and (25).

Thus, for each pixel location, the following equations are used.

$$R = R_0 + a \cdot \Delta G_R + b \cdot \Delta G_B \qquad (30)$$

$$B = B_0 + c \cdot \Delta G_R + d \cdot \Delta G_B \qquad (31)$$

The above equations are derived from equations (8) and (9) using equations (28) and (29).

**Claims**

1. A method of demosaicing a mosaiced image using an averaging mask, where the mosaiced image comprises first (G) and second (R) colour values, to derive a demosaiced image, where the demosaiced image comprises interpolated first values ($G_0$; G') and corrected second values (R'), the method comprising the steps of:

   interpolating (310; 320; 704) the first colour values (G) to derive the interpolated first values ($G_0$; G');
   interpolating (330; 804) the second colour values (R) using the averaging mask to derive averaged second values ($R_0$); and
   deriving, for each averaged second value ($R_0$), the corrected second value (R') by:

   sub-sampling (322; 706) all of the interpolated first values ($G_0$) within the averaging mask that are associated with the second value (R);
   averaging (326; 708) the sub-sampled interpolated first values using the averaging mask to derive a colour discontinuity equalization value ($G_{R0}$); and
   summing (332, 334; 806, 808) the averaged second value ($R_0$), the negative of the colour discontinuity equalization value ($G_{R0}$) and the interpolated first value ($G_0$) associated with the averaged second value ($R_0$), to give the corrected second value (R').

2. The method of claim 1, wherein said step of interpolating (310; 320; 704) said first colour values (G) includes adaptively interpolating (310) said first colour values (G) using an interpolation technique selected from at least a first interpolation technique and a second interpolation technique.

3. A system for demosaicing a mosaiced image using an averaging mask, where the mosaiced image comprises first (G) and second (R) colour values, to derive a demosaiced image, where the demosaiced image comprises interpolated first values ($G_0$; G') and corrected second values (R'), the system comprising:

   a first interpolating module (310; 320) for interpolating the first colour values (G) to derive the interpolated first values ($G_0$; G');
   a second interpolating module (330; 804) for interpolating the second colour values (R) using the averaging mask to derive averaged second values ($R_0$); and
   a colour discontinuity equalization module (322, 326, 332, 334) for deriving a corrected second value (R') for each averaged second value ($R_0$), comprising:

   a sub-sampling module (322) for sub-sampling all of the interpolated first values ($G_0$) within the averaging mask that are associated with the second value (R);
   an averaging module (326) for averaging the sub-sampled interpolated first values using the averaging mask to derive a colour discontinuity equalization value ($G_{R0}$); and
   a computing unit (332, 334) for summing the averaged second value ($R_0$), the negative of the colour discontinuity equalization value ($G_{R0}$) and the interpolated first value ($G_0$) associated with the averaged second value ($R_0$), to give the corrected second value (R').

4. A system according to claim 3, wherein said first interpolating module (310; 320) includes an adaptive interpolator (310; 320) that is configured to adaptively interpolate said first colour values (G) using an interpolation technique selected from at least a first interpolation technique and a second interpolation technique.

**Patentansprüche**

1. Ein Verfahren zum Entmosaikisieren eines mosaikartigen Bildes unter Verwendung einer Mittelungsmaske, wobei das mosaikartige Bild erste (G) und zweite (R) Farbwerte aufweist, um ein entmosaikisiertes Bild abzuleiten, wobei das entmosaikisierte Bild interpolierte erste Werte ($G_0$; G') und korrigierte zweite Werte (R') aufweist, wobei das Verfahren folgende Schritte umfasst:

   Interpolieren (310; 320; 704) der ersten Farbwerte (G), um die interpolierten ersten Werte ($G_0$; G') abzuleiten;
   Interpolieren (330; 804) der zweiten Farbwerte (R) unter Verwendung der Mittelungsmaske, um gemittelte zweite Werte ($R_0$) abzuleiten; und
   Ableiten, für jeden gemittelten zweiten Wert ($R_0$), des korrigierten zweiten Wertes (R') durch folgende Schritte:

Unterabtasten (322; 706) aller interpolierten ersten Werte ($G_0$) in der Mittelungsmaske, die dem zweiten Wert (R) zugeordnet sind;

Mitteln (326; 708) der unterabgetasteten interpolierten ersten Werte unter Verwendung der Mittelungsmaske, um einen Farbdiskontinuitätsausgleichswert ($G_{R0}$) abzuleiten; und

Summieren (332, 334; 806, 808) des gemittelten zweiten Werts ($R_0$), der Negativzahl des Farbdiskontinuitätsausgleichswerts ($G_{R0}$) und des interpolierten ersten Werts ($G_0$), der dem gemittelten zweiten Wert ($R_0$) zugeordnet ist, um den korrigierten zweiten Wert (R') zu ergeben.

**2.** Das Verfahren gemäß Anspruch 1, bei dem der Schritt des Interpolierens (310; 320; 704) der ersten Farbwerte (G) ein adaptives Interpolieren (310) der ersten Farbwerte (G) unter Verwendung einer Interpolationstechnik umfasst, die aus zumindest einer ersten Interpolationstechnik und einer zweiten Interpolationstechnik ausgewählt ist.

**3.** Ein System zum Entmosaikisieren eines mosaikartigen Bildes unter Verwendung einer Mittelungsmaske, wobei das mosaikartige Bild erste (G) und zweite (R) Farbwerte aufweist, um ein entmosaikisiertes Bild abzuleiten, wobei das entmosaikisierte Bild interpolierte erste Werte ($G_0$; G') und korrigierte zweite Werte (R') aufweist, wobei das System folgende Merkmale aufweist:

ein erstes Interpolationsmodul (310; 320) zum Interpolieren der ersten Farbwerte (G), um die interpolierten ersten Werte ($G_0$; G') abzuleiten;

ein zweites Interpolationsmodul (330; 804) zum Interpolieren der zweiten Farbwerte (R) unter Verwendung der Mittelungsmaske, um gemittelte zweite Werte ($R_0$) abzuleiten; und

ein Farbdiskontinuitätsausgleichsmodul (322, 326, 332, 334) zum Ableiten eines korrigierten zweiten Werts (R') für jeden gemittelten zweiten Wert ($R_0$), das folgende Merkmale aufweist:

ein Unterabtastmodul (322) zum Unterabtasten aller interpolierten ersten Werte ($G_0$) in der Mittelungsmaske, die dem zweiten Wert (R) zugeordnet sind;

ein Mittelungsmodul (326) zum Mitteln der unterabgetasteten interpolierten ersten Werte unter Verwendung der Mittelungsmaske, um einen Farbdiskontinuitätsausgleichswert ($G_{R0}$) abzuleiten; und

eine Recheneinheit (332, 334) zum Summieren des gemittelten zweiten Werts ($R_0$), der Negativzahl des Farbdiskontinuitätsausgleichswerts ($G_{R0}$) und des interpolierten ersten Werts ($G_0$), der dem gemittelten zweiten Wert ($R_0$) zugeordnet ist, um den korrigierten zweiten Wert (R') zu ergeben.

**4.** Ein System gemäß Anspruch 3, bei dem das erste Interpolationsmodul (310; 320) einen adaptiven Interpolator (310; 320) umfasst, der dazu konfiguriert ist, die ersten Farbwerte (G) unter Verwendung einer Interpolationstechnik, die aus zumindest einer ersten Interpolationstechnik und einer zweiten Interpolationstechnik ausgewählt ist, auf adaptive Weise zu interpolieren.

## Revendications

**1.** Méthode de démosaïquage d'une image mosaïquée au moyen d'un masque de moyennage, l'image mosaïquée comprenant des premières (G) et des secondes (R) valeurs de couleur, afin d'obtenir une image démosaïquée, l'image démosaïquée comprenant des premières valeurs interpolées ($G_0$; G') et des secondes valeurs corrigées (R'), la méthode comprenant les étapes :

■ d'interpolation (310 ; 320 ; 704) des premières valeurs de couleur (G) afin d'obtenir les premières valeurs interpolées ($G_0$; G') ;

■ d'interpolation (330 ; 804) des secondes valeurs de couleur (R) au moyen du masque de moyennage afin d'obtenir des secondes valeurs moyennées ($R_0$) ; et

■ d'obtention, pour chaque seconde valeur moyennée ($R_0$), de la seconde valeur corrigée (R') par :

■ sous-échantillonnage (322 ; 706) de la totalité des premières valeurs, interpolées ($G_0$) dans le masque de moyennage qui sont associées à la seconde valeur (R) ;

■ moyennage (326 ; 708) des premières valeurs interpolées sous-échantillonnées au moyen du masque de moyennage afin d'obtenir une valeur d'égalisation de discontinuité des couleurs ($G_{R0}$) ; et

■ addition (332, 334 ; 806, 808) de la seconde valeur moyennée ($R_0$), du négatif de la valeur d'égalisation de discontinuité des couleurs ($G_{R0}$) et de la première valeur interpolée ($G_0$) associés à la seconde valeur moyennée ($R_0$), pour donner la seconde valeur corrigée (R').

**2.** Méthode selon la revendication 1, dans laquelle ladite étape d'interpolation (310 ; 320 ; 704) desdites premières valeurs de couleur (G) comprend l'interpolation adaptative (310) desdites premières valeurs de couleur (G) au moyen d'une technique d'interpolation sélectionnée parmi au moins une première technique d'interpolation et une seconde technique d'interpolation.

**3.** Système de démosaïquage d'une image mosaïquée au moyen d'un masque de moyennage, l'image mosaïquée comprenant des premières (G) et des secondes (R) valeurs de couleur, afin d'obtenir une image démosaïquée, l'image démosaïquée comprenant des premières valeurs interpolées ($G_0$; G') et des secondes valeurs corrigées (R'), le système comprenant :

■ un premier module d'interpolation (310 ; 320) destiné à interpoler les premières valeurs de couleur (G) afin d'obtenir les premières valeurs interpolées ($G_0$; G') ;
■ un second module d'interpolation (330 ; 804) destiné à interpoler les secondes valeurs de couleur (R) au moyen du masque de moyennage afin d'obtenir des secondes valeurs moyennées ($R_0$) ; et
■ un module d'égalisation de discontinuité des couleurs (322, 326, 332, 334) destiné à obtenir une seconde valeur corrigée (R') pour chaque seconde valeur moyennée ($R_0$), comprenant :

■ un module de sous-échantillonnage (322) destiné à sous-échantillonner la totalité des premières valeurs interpolées ($G_0$) dans le masque de moyennage qui sont associées à la seconde valeur (R) ;
■ un module de moyennage (326) destiné à moyenner les premières valeurs interpolées sous-échantillonnées au moyen du masque de moyennage afin d'obtenir une valeur d'égalisation de discontinuité des couleurs ($G_{R0}$) ; et
■ un module de calcul (332 ; 334) destiné à additionner la seconde valeur moyennée ($R_0$), le négatif de la valeur d'égalisation de discontinuité des couleurs ($G_{R0}$) et la première valeur interpolée ($G_0$) associés à la seconde valeur moyennée ($R_0$), pour donner la seconde valeur corrigée (R').

**4.** Système selon la revendication 3, dans lequel le premier module d'interpolation (310 ; 320) comprend un interpolateur adaptatif (310 ; 320) qui est configuré pour interpoler de façon adaptative lesdites premières valeurs de couleur (G) au moyen d'une technique d'interpolation sélectionnée parmi au moins une première technique d'interpolation et une seconde technique d'interpolation.

100

Image
Capturing
Unit

Demosaicing
Unit

Compression
Unit

Storage
Unit

102

104

106

108

FIG. 1

FIG. 2A

FIG. 2B

FIG. 3

308

408
Horizontal Gradient Filter

410
Horizontal Curvature Filter

402

416
Variation Magnitude Analyzer

412
Vertical Gradient Filter

G

414
Vertical Curvature Filter

404
G1-G2 Smoothing Unit

406
Selector

FIG. 4

FIG. 5

EP 1 371 014 B1

Receive the $G$ intensity values within a window of observation of an input mosaiced image —602

Perform smoothing of $G1$-$G2$ mismatch —604

Determine the maximum intensity variation magnitude —606

Y    > threshold?    N

608

Transmit the original $G$ intensity values —610

Transmit the smoothed $G$ intensity values —612

Perform a horizontal interpolation —614

Perform a vertical interpolation —616

Compute a horizontal variation value and a vertical variation value —618

Y    Horizontal variation value $<$ vertical variation value?    N

620

Transmit the results of horizontal interpolation —622

Transmit the results of vertical interpolation —624

Perform image sharpening using only the interpolated $G$ intensity values —626

FIG. 6

Receive the $G$ intensity values within a window of observation of an input mosaiced image ⟶ 702

Perform adaptive interpolation to derive $G_0$ values ⟶ 704

Sub-sample the $G_0$ values in terms of $R$ locations ⟶ 706

Sub-sample the $G_0$ values in terms of $B$ locations ⟶ 712

Interpolate and average the $R$ sub-sampled $G_0$ values to derive $G_{RO}$ values ⟶ 708

Interpolate and average the $B$ sub-sampled $G_0$ values to derive $G_{BO}$ values ⟶ 714

Transmit the $G_{RO}$ values ⟶ 710

Transmit the $G_{BO}$ values ⟶ 716

# FIG. 7

Receive the $\mathcal{R}$ intensity values within a window of observation of an input mosaiced image ⟋— 802

Interpolate and average the $\mathcal{R}$ intensity values to derive $\mathcal{R}_\varrho$ values ⟋— 804

Subtract the $\mathcal{R}_\varrho$ values by the $\mathcal{G}_{\mathcal{R}_O}$ values to derive $\mathcal{R}_\varrho\text{-}\mathcal{G}_{\mathcal{R}_O}$ values ⟋— 806

Add the $\mathcal{R}_\varrho\text{-}\mathcal{G}_{\mathcal{R}_O}$ values and the $\mathcal{G}'$ values to derive $\mathcal{R}'$ values ⟋— 808

Output the $\mathcal{R}'$ values ⟋— 810

# FIG. 8

FIG. 9

FIG. 10

FIG. 11

FIG. 12

EP 1 371 014 B1

EP 1 371 014 B1

FIG. 13